# EUROPÄISCHE PATENTSCHRIFT

(11) **EP 3 638 527 B1**
(45) Veröffentlichungstag und Bekanntmachung des Hinweises auf die Patenterteilung: **07.04.2021**
(21) Anmeldenummer: 18727136.6
(22) Anmeldetag: 15.05.2018
(51) Int. Cl.: B60K 6/48, B60K 6/405, B60K 6/387, F16D 25/12

(54) **HYBRIDMODUL MIT HYDRAULISCH GEKÜHLTER REIBKUPPLUNG SOWIE HYBRIDANTRIEBSSTRANG**
HYBRID MODULE HAVING A HYDRAULICALLY COOLED FRICTION CLUTCH, AND HYBRID DRIVE TRAIN
MODULE HYBRIDE AVEC EMBRAYAGE À FRICTION REFROIDI HYDRAULIQUEMENT AINSI QUE GROUPE MOTOPROPULSEUR HYBRIDE

(30) Priorität: 13.06.2017 DE 102017112981
(43) Veröffentlichungstag der Anmeldung: 22.04.2020
(73) Patentinhaber: Schaeffler Technologies AG & Co. KG, 91074 Herzogenaurach (DE)
(72) Erfinder: LEHMANN, Steffen, 76275 Ettlingen (DE); TRINKENSCHUH, Andreas, 77815 Bühl (DE)
(86) Internationale Anmeldenummer: PCT/DE2018/100458
(87) Internationale Veröffentlichungsnummer: WO 2018/228637

(56) Entgegenhaltungen:
- DE-A1-102008 006 062
- DE-A1-102009 059 944
- DE-A1-102010 014 675
- DE-A1-102011 005 724

## Beschreibung

Die Erfindung betrifft ein Hybridmodul für einen Antriebsstrang eines Kraftfahrzeuges, wie ein Pkw, ein Lkw, ein Bus oder ein sonstiges Nutzfahrzeug, mit einem Gehäuse, einer in dem Gehäuse aufgenommenen / angeordneten elektrischen Maschine, die einen Stator und einen radial innerhalb des Stators angeordneten Rotor aufweist, und zumindest einer radial innerhalb des Rotors angeordneten hydraulisch gekühlten / flüssigkeitsgekühlten Reibkupplung. Des Weiteren betrifft die Erfindung einen Hybridantriebsstrang für ein Kraftfahrzeug, mit diesem Hybridmodul.

Ein Hybirdmodul gemäß dem Oberbegriff des Anspruchs 1 ist aus jeder der DE 10 2011 005 724 A1, der DE 10 2008 006 062 A1 und der DE 10 2009 059 944 A1 bekannt.

Genauer gesagt ist in der DE 10 2009 059 944 A1 ein Hybridmodul für einen Antriebsstrang eines Fahrzeuges mit einer ersten Trennkupplung, einem Elektromotor und einer zweiten Trennkupplung offenbart. Die erste Trennkupplung ist im Momentenfluss zwischen einem Verbrennungsmotor im Antriebsstrang und dem Elektromotor und die zweite Trennkupplung ist im Momentenfluss zwischen Elektromotor und einem Getriebe im Antriebsstrang angeordnet. Die erste Trennkupplung und die zweite Trennkupplung sind in einem gemeinsamen Nassraum angeordnet. In einem vorteilhaften Ausführungsbeispiel kühlt ein durch diesen Nassraum hindurchgeführtes Druckmittel mehrere Reiblamellen zweier Nasskupplungen ab und strömt nach radial außen, von wo es durch ein mittels von Führungsstiften fest mit einem Getriebegehäuse verbundenen Schöpfrohr abgeschöpft und über eine Ableitung einem Getriebesumpf zugeführt wird.

Weiterer Stand der Technik ist mit der DE 10 2010 014 675 A1 und der DE 10 2006 008 205 A1 bekannt.

Bei den bekannten Ausführungen besteht jedoch der Nachteil, dass eine Kühlung der radial innerhalb der elektrischen Maschine angeordneten Bestandteile, wie Reibkupplungen, relativ schwierig ist. Dies liegt insbesondere daran, dass sich das zur Kühlung verwendete Hydraulikmittel in Spaltbereichen des Rotors und teilweise auch in Spaltbereichen des Stators ansammelt, von wo aus es nur relativ schwierig abgeführt werden kann.

Es ist daher die Aufgabe der vorliegenden Erfindung, die aus dem Stand der Technik bekannten Nachteile zu beheben und insbesondere ein möglichst bauraumkompaktes Hybridmodul zur Verfügung zu stellen, dessen Reibkupplungen möglichst effektiv gekühlt werden.

Dies wird dadurch gelöst, dass eine zum Kühlen mehrerer Reibflächen der zumindest einen Reibkupplung ausgestaltete Kühleinrichtung vorgesehen ist, die einen ein Hydraulikmittel im Betrieb mitnehmenden, drehfest mit dem Rotor gekoppelten, ringförmigen Sammelbereich sowie einen gehäusefesten und in den Sammelbereich hineinragenden Schöpfabschnitt, über den im Betrieb das Hydraulikmittel einem (außerhalb des Gehäuses angeordneten) Rückhalteraum zugeführt wird, aufweist.

Dadurch ist innerhalb des Elektromotors eine Geometrie vorgegeben, durch die das Hydraulikmittel, das zuvor zum Kühlen der Reibflächen verwendet wurde, direkt aus dem Gehäuse hinaus geleitet wird. Dadurch wird ein Wärmestau in Bereichen des Rotors sowie des Stators vermieden. Das Hybridmodul wird dadurch auch leistungsfähiger.

Weitere vorteilhafte Ausführungsformen sind mit den Unteransprüchen beansprucht und nachfolgend näher erläutert.

Der Sammelbereich ist radial außerhalb der Reibflächen / Reibelemente der zumindest einen Reibkupplung angeordnet. Der Sammelbereich ist bevorzugt als eine in Umfangsrichtung vollständig umlaufende, in radialer Richtung nach innen geöffnete Rinne ausgeformt. Die Rinne ist im Querschnitt betrachtet U-Förmig oder L- förmig ausgeformt. Dadurch werden der Aufbau sowie der Herstellaufwand des Sammelbereiches weiter vereinfacht.

Weiterhin ist es zweckmäßig, wenn der Sammelbereich an einem den Rotor aufnehmenden Rotorträger drehfest angebracht ist. Somit ist der Sammelbereich im Aufbau wiederum besonders einfach ausgeführt.

Hinsichtlich der Anbringung des Sammelbereiches an dem Rotorträger ist es von Vorteil, den Sammelbereich stoffeinteilig mit dem Rotorträger auszubilden.

Weiterhin ist es zweckmäßig, den Sammelbereich separat von dem Rotorträger auszubilden und ihn an dem Rotorträger zu befestigen. In diesem Zusammenhang ist es bevorzugt, den Sammelbereich stoffschlüssig an den Rotorträger anzubringen, etwa anzuschweißen. Alternativ zu dieser stoffschlüssigen Anbringung ist es weiter bevorzugt, den Sammelbereich durch eine kraft- und/oder stoffschlüssige Verbindung an dem Rotorträger anzubringen. In diesem Zusammenhang sind Einrast- / Schnappverbindungen bevorzugt. Auch ist ein Ein- oder Aufpressen des Sammelbereiches in oder an dem Rotorträger ist weiterhin bevorzugt.

Ist ein erster Schöpfabschnitt vorgesehen, der als ein in den Sammelbereich einmündendes Schöpfrohr ausgebildet ist, ist der Schöpfabschnitt besonders einfach herstellbar. Der Schöpfabschnitt kann dadurch in beliebiger Weise vorgeformt und an den Sammelbereich konstruktiv angepasst werden.

Wenn das Schöpfrohr durch ein in einer gehäusefesten Seitenwand eingebrachtes Durchgangsloch hindurchragt, wird das Hydraulikmittel aus dem Gehäuse auf direktem Weg abgeleitet. Das Schöpfrohr weist hierzu besonders bevorzugt eine eine gehäusefeste Seitenwand durchdringende (sich axial erstreckende) Abführleitung auf.

Des Weiteren ist es von Vorteil, wenn ein zweiter Schöpfabschnitt (zusätzlich oder alternativ zu dem ersten Schöpfabschnitt) vorgesehen ist, der als eine unmittelbar an der gehäusefesten Seitenwand angebrachte, vorzugsweise stoffeinteilig mit dieser gehäusefesten Seitenwand ausgeformte, Schöpfnase ausgebildet ist. Dadurch wird der Schöpfabschnitt beim Ausbilden der Seitenwand direkt mit ausgeformt.

Zweckmäßig ist es auch, wenn der zumindest eine Schöpfabschnitt zumindest eine, weiter bevorzugt zumindest zwei, in Umfangsrichtung des Rotors weisende Eintrittsöffnung(/-en) auf, die in radialer Richtung in den Sammelbereich hineinragt(/-en).

Ist der der zumindest eine Schöpfabschnitt aus einem Kunststoff / Kunststoffmaterial hergestellt / ausgebildet, ist der Schöpfabschnitt kostengünstig ausformbar. Diesbezüglich ist es auch vorteilhaft, wenn der zumindest eine Schöpfabschnitt alternativ aus einem Metall, wie einem Metallblech / Stahlblech, gebildet ist. Dadurch ist der Schöpfabschnitt umformtechnisch besonders einfach herzustellen.

In diesem Zusammenhang ist es zudem zweckmäßig, wenn der Sammelbereich ebenfalls aus einem Metall hergestellt ist. Besonders geeignet zum Ausbilden des Sammelbereiches ist ein umformtechnisch bearbeitetes Metallblech.

Des Weiteren ist es vorteilhaft, wenn mehrere Schöpfabschnitte in Umfangsrichtung verteilt angeordnet sind.

Ist der der zumindest eine Schöpfabschnitt mittels eines Halteelementes an dem Gehäuse direkt oder indirekt befestigt, ist der Schöpfabschnitt ausreichend fest in dem Hybridmodul gehalten / abgestützt.

Der zumindest eine Schöpfabschnitt ist wiederum bevorzugt an dem Halteelement formschlüssig, kraftschlüssig und/oder stoffschlüssig angebracht. Hierbei sind insbesondere Schweißverbindungen als stoffschlüssige Verbindung, eine Schnapp-/Einclips-Verbindung als formschlüssige Verbindung oder eine Pressverbindung in Form einer kraftschlüssigen Verbindung bevorzugt.

Des Weiteren betrifft die Erfindung einen Hybridantriebsstrang für ein Kraftfahrzeug, mit dem erfindungsgemäßen Hybridmodul nach zumindest einer der zuvor beschriebenen Ausführungen.

In anderen Worten ausgedrückt, ist erfindungsgemäß eine ölgekühlte Hybridkupplung (Reibkupplung des Hybridmoduls) mit einem Schöpfrohr umgesetzt. Eine Kühlflüssigkeit / ein zur Kühlung dienendes Hydraulikmittel, wie ein Kühlöl, das in der zumindest einen Reibkupplung zur Kühlung vorgesehen ist, wird unter der Verwendung eines Kühlflüssigkeitssammelringes (Sammelbereich) gesammelt. Der Kühlflüssigkeitssammelring ist wiederum mit dem Rotor drehfest verbunden. Die Kühlflüssigkeit wird in einem benachbarten Bereich oder in eine benachbarte Kammer (Rückhalteraum), bspw. eines Getriebes, unter der Verwendung einer Kühlflüssigkeitsumlenkleitung (Schöpfrohr) oder einer Kühlflüssigkeitssammelnase (Schöpfnase) abgeleitet.

Die Erfindung wird nun nachfolgend anhand von Figuren näher erläutert, in welchem Zusammenhang verschiedene Ausführungsbeispiele beschrieben sind.

### Es zeigen:

- Fig. 1:: eine Längsschnittdarstellung eines erfindungsgemäßen Hybridmoduls nach einem ersten Ausführungsbeispiel, wobei gut zu erkennen ist, wie ein ringförmiger Sammelbereich einer Kühleinrichtung des Hybridmoduls an einem Rotorträger angebracht ist und mit einem als Schöpfrohr ausgebildeten Schöpfabschnitt zusammenwirkt,
- Fig. 2:: eine Längsschnittdarstellung des Hybridmoduls des ersten Ausführungsbeispiels, ähnlich zu der Fig. 1, wobei das Hybridmodul in einem Betriebszustand veranschaulicht ist und ein Strömungsweg eines durch die Reibkupplungen in radialer Richtung hindurch strömenden Hydraulikmittels veranschaulicht ist,
- Fig. 3:: eine perspektivische Darstellung des in Längsrichtung geschnittenen Hybridmoduls der Fign. 1 und 2,
- Fig. 4:: eine Längsschnittdarstellung eines erfindungsgemäßen ausschnittsweise gezeigten Hybridmoduls nach einem zweiten Ausführungsbeispiel, wobei der Sammelbereich nun in einer axialen Richtung des Hybridmoduls gesehen neben einem Stator angeordnet ist,
- Fig. 5:: eine Vorderansicht des Hybridmoduls nach Fig. 4 zur Veranschaulichung der Position des Schöpfabschnittes,
- Fig. 6:: eine Längsschnittdarstellung eines erfindungsgemäßen ausschnittsweise gezeigten Hybridmoduls nach einem dritten Ausführungsbeispiel, das im Wesentlichen gemäß dem ersten Ausführungsbeispiel ausgeführt ist, jedoch seitens der Form der Seitenwandung etwas anders ausgestaltet ist,
- Fig. 7:: eine Vorderansicht des Hybridmoduls nach Fig. 6 zur Veranschaulichung der Position des Schöpfabschnittes,
- Fig. 8:: eine Längsschnittdarstellung eines erfindungsgemäßen ausschnittsweise gezeigten Hybridmoduls nach einem vierten Ausführungsbeispiel, wobei der Schöpfabschnitt nun als eine an einer gehäusefesten Seitenwand integral ausgebildeten Schöpfnase ausgeformt ist,
- Fig. 9:: eine Vorderansicht des Hybridmoduls nach Fig. 8 zur Veranschaulichung der Position des Schöpfabschnittes,
- Fig. 10:: eine Längsschnittdarstellung eines erfindungsgemäßen ausschnittsweise gezeigten Hybridmoduls nach einem fünften Ausführungsbeispiel, wobei der Sammelbereich im Schnitt betrachtet im Wesentlichen L-förmig ausgeformt ist und mit einer den Schöpfabschnitt ausbildenden Schöpfnase zusammenwirkt,
- Fig. 11:: eine Vorderansicht des Hybridmoduls nach Fig. 10 zur Veranschaulichung der Position des Schöpfabschnittes,
- Fig. 12:: eine perspektivische Darstellung des als Schöpfrohr ausgebildeten Schöpfabschnittes, wie es in dem Hybridmodul des ersten Ausführungsbeispiels eingesetzt ist,
- Fig. 13:: eine Längsschnittdarstellung des in Fig. 12 dargestellten Schöpfrohres, wobei die Schnittebene derart gewählt ist, dass zwei jeweils eine Einlassöffnung ausbildende Schöpfkelche gut erkennbar sind, und
- Fig. 14:: eine Querschnittsdarstellung des Schöpfrohres nach den Fign. 12 und 13 entlang der in Fig. 13 mit "XIV-XIV" bezeichneten Schnittlinie.

Die Figuren sind lediglich schematischer Natur und dienen ausschließlich dem Verständnis der Erfindung. Die gleichen Elemente sind mit denselben Bezugszeichen versehen. Auch können die verschiedenen Merkmale der unterschiedlichen Ausführungsbeispiele frei miteinander kombiniert werden.

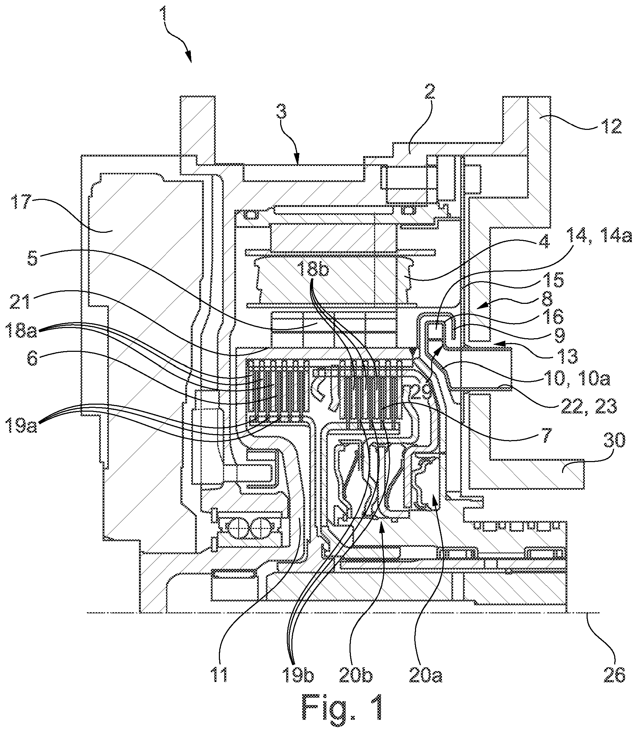

In Verbindung mit Fig. 1 ist ein erfindungsgemäßes Hybridmodul 1 in seinem Aufbau gut zu erkennen. Das Hybridmodul 1 ist als ein Hybridmodul des koaxialen Typs, alternativ des achsparallelen Typs, ausgeführt. Das Hybridmodul 1 weist demzufolge ein Gehäuse 2 auf, innerhalb dessen eine elektrische Maschine / ein Elektromotor 3 angeordnet ist. Der Elektromotor 3 ist mit seinem Rotor 5 koaxial zu einer Drehachse 26 des Hybridmoduls 1 (d.h. seiner Reibkupplungen 6, 7) angeordnet. Das Gehäuse 2 ist im Betrieb weiter mit einem fahrzeugfesten Bestandteil, hier einem Getriebe, nämlich einem Getriebegehäuse des Getriebes, verbunden. Insbesondere ist das Gehäuse 2 in dieser Ausführung unmittelbar durch eine Seitenwand 12 des Getriebes / Getriebegehäuses mit ausgebildet.

Fest in dem Gehäuse 2 ist ein Stator 4 der elektrischen Maschine 3 aufgenommen. Der Rotor 5 ist relativ zu diesem Stator 4 drehbar gelagert sowie radial innerhalb des Stators 4 angeordnet. Der Rotor 5 ist wiederum an einem Rotorträger 11 drehbar aufgenommen. Der Rotor 5 ist an einer radialen Außenseite eines an dem Rotorträger 11 ausgebildeten, sich in axialer Richtung (in Bezug auf die Drehachse 26) erstreckenden Hülsenbereich 21 drehbar aufgenommen. Der Rotorträger 11 ist radial und axial an dem Gehäuse 2 abgestützt / gelagert. Der Rotorträger 11 ist im Betrieb auf typische Weise mit einer Ausgangwelle einer hier der Übersichtlichkeit halber nicht weiter dargestellten Verbrennungskraftmaschine, wie einem Otto- oder Dieselmotor, rotatorisch gekoppelt. Der Rotorträger 11 ist in Fig. 1 bereits mit einem Torsionsschwingungsdämpfer 17, der als Zweimassenschwungrad ausgeführt ist, rotatorisch verbunden. Der Torsionsschwingungsdämpfer 17 ist auf seiner dem Rotorträger axial abgewandten Seite im Betrieb direkt mit der Kurbelwelle drehfest weiter verbunden.

Der Rotorträger 11 dient auf typische Weise als Eingangsdrehteil zweier Reibkupplungen 6 und 7. Die beiden Reibkupplungen 6 und 7 sind jeweils als Reiblamellenkupplungen ausgeführt und weisen somit jeweils ein Lamellenpaket auf. Die beiden Reibkupplungen 6 und 7 sind als Teilkupplungen ausgeführt und bilden zusammen eine Doppelkupplung aus. Mit dem Rotorträger 11 sind jeweils mehrere zueinander in axialer Richtung beabstandete sowie relativ zueinander in axialer Richtung verschiebbare erste Reibelemente 18a, 18b der jeweiligen Reibkupplung 6 oder 7 drehfest verbunden. Die ersten Reibelemente 18a der ersten Reibkupplung 6 sind in axialer Richtung beabstandet angeordnet und wechseln sich in axialer Richtung mit zweiten Reibelementen 19a der ersten Reibkupplung 6 ab. Die ersten Reibelemente 18a und die zweiten Reibelemente 19a der ersten Reibkupplung 6 sind jeweils lamellenartig / als Reiblamellen ausgeformt. Die ersten Reibelemente 18a und die zweiten Reibelemente 19a der ersten Reibkupplung 6 bilden zusammen ein erstes Lamellenpaket. Die ersten Reibelemente 18b der zweiten Reibkupplung 7 sind in axialer Richtung beabstandet angeordnet und wechseln sich in axialer Richtung mit zweiten Reibelementen 19b der zweiten Reibkupplung 7 ab. Die ersten Reibelemente 18b und die zweiten Reibelemente 19b der zweiten Reibkupplung 7 sind ebenfalls jeweils lamellenartig/ als Reiblamellen ausgeformt. Die ersten Reibelemente 18b und die zweiten Reibelemente 19b der zweiten Reibkupplung 7 bilden zusammen ein zweites Lamellenpaket. Die Reibkupplungen 6, 7 sind auf bekannte Weise mittels verschiedener Betätigungseinrichtungen 20a und 20b im Betrieb zwischen ihren geöffneten und geschlossenen Stellungen verbringbar.

Die Reibkupplungen 6 und 7 sind beide radial innerhalb des Rotors 5, nämlich radial innerhalb des den Rotor 5 aufnehmenden Hülsenbereichs 21 des Rotorträgers 11, angeordnet. Zudem sind die Reibkupplungen 6, 7 beide in axialer Richtung innerhalb zweier einander abgewandter Seitenflächen des Stators 4 angeordnet. Insbesondere sind die beiden Lamellenpakete mit ihren Reibelementen 18a, 18b sowie 19a und 19b axial vollständig innerhalb dieser beiden einander abgewandten Seitenflächen angeordnet.

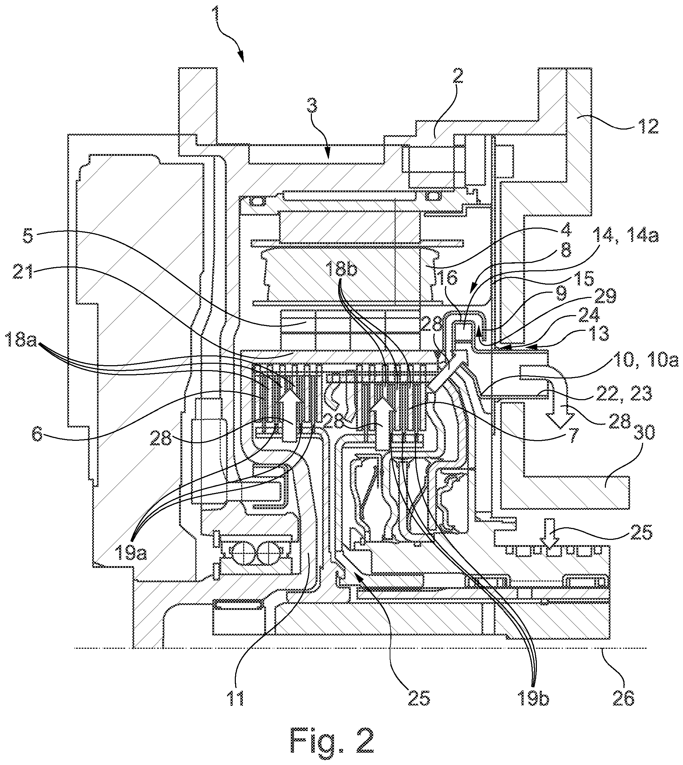

Die Reibkupplungen 6, 7 sind hydraulisch gekühlt / flüssigkeitsgekühlt, d.h. nass laufend, ausgeführt. Eine Kühleinrichtung 8 dient im Betrieb zum Kühlen der Reibelemente 18a, 18b, 19a, 19b mittels eines durch den Innenraum des Gehäuses 2 strömenden Hydraulikmittels. Ein beispielhafter Strömungsweg des Hydraulikmittels ist in Fig. 2 mit den Richtungspfeilen 28 veranschaulicht.

Zum Ableiten des an den Reibelementen 18a, 18b, 19a, 19b aufgrund der wirkenden Zentrifugalkraft vorbeigeströmten Hydraulikmittels aus dem Gehäuse 2 weist die Kühleinrichtung 8 radial außerhalb der Reibelemente 18a, 18b, 19a, 19b einen ringförmigen Sammelbereich 9 auf, der mit einem Schöpfabschnitt 10 zusammenwirkt. Der Sammelbereich 9 ist als eine in radialer Richtung nach innen geöffnete Rinne ausgebildet und drehfest mit dem Rotor 5 gekoppelt. Der Sammelbereich 9 erstreckt sich in Umfangsrichtung vollständig herum. Der Sammelbereich 9 ist prinzipiell so angeordnet, dass er im Betrieb den Großteil des nach außen beförderten Hydraulikmittels auffängt / sammelt. Der Sammelbereich 9 ist an einem axialen Ende des Hülsenbereiches 21 angeordnet. Der Sammelbereich 9 ist so an dem Hülsenbereich 21 angebracht, dass eine in radiale Richtung nach innen weisende Einmündung / Öffnung 29 (Fig. 1) des Sammelbereiches 9 von dem Hülsenbereich 21 nicht verdeckt ist.

Von radial innen ragt in den Sammelbereich 9 ein Schöpfabschnitt 10 hinein. In diesem Ausführungsbeispiel nach Fig. 1 ist der Schöpfabschnitt 10 als ein erster Schöpfabschnitt 10a in Form eines Schöpfrohres ausgebildet. Der erste Schöpfabschnitt 10a weist eine Eintrittsöffnung 14; 14a, 14b auf, die in radialer Richtung in den Sammelbereich 9 hinein ragt. Der Schöpfabschnitt 10 dient zum Ableiten und Zurückführen des Hydraulikmittels hin zu einem in diesem Ausführungsbeispiel der Übersichtlichkeit halber nicht dargestellten Rückhalteraum außerhalb des Gehäuses 2 des Hybridmoduls 1.

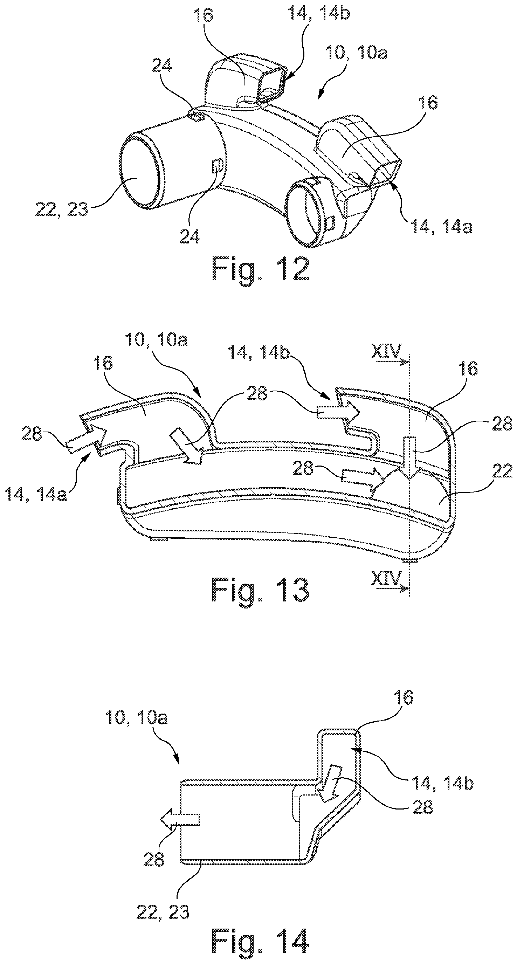

Die weitere Ausbildung des ersten Schöpfabschnittes 10a ist in Verbindung mit den Fign. 12 bis 14 verdeutlicht. Hierin ist zu erkennen, dass der erste Schöpfabschnitt 10a zwei Eintrittsöffnungen 14a und 14b aufweist / ausbildet, die in Umfangsrichtung zueinander beabstandet sind. Jede Eintrittsöffnung 14a, 14b ist von einem Schöpfkelch 16 / einer schöpfkelchartigen Schaufelgeometrie gebildet. Der jeweilige Schöpfkelch 16 leitet das Hydraulikmittel in radialer Richtung nach innen um. In Fig. 13 ist das den ersten Schöpfabschnitt 10a durchströmende Hydraulikmittel anhand der Richtungspfeile 28 verdeutlicht. Die durch die Schöpfkelche 16 gebildeten Passagen münden in radialer Richtung der Drehachse 26 nach innen in eine Abführleitung 22 ein. Die Abführleitung 22 erstreckt sich entlang der axialen Richtung / Drehachse 26. Die Abführleitung 22 leitet das durch die Schöpfkelche 16 aus dem Sammelbereich 9 abgeschöpfte Hydraulikmittel bei rotierendem Rotor 5 aus dem Gehäuse 2 hinaus. Die Abführleitung 22 ist im Wesentlichen durch einen rohrförmigen Stutzen 23 umgesetzt. Die Abführleitung 22 durchdringt eine das Gehäuse 2 mit ausbildende Seitenwand 12.

In diesem Ausführungsbeispiel ist der erste Schöpfabschnitt 10a als Kunststoffbauteil ausgebildet. Es sind jedoch prinzipiell auch Ausführungen als Metallteil, bspw. aus einem Metallblech, denkbar.

An dem Stutzen 23 sind Haltenasen in Form von Rastnasen 24 vorgesehen, die im befestigten Zustand nach Fig. 1 in einem Halteelement 15 formschlüssig eingerastet sind. Der erste Schöpfabschnitt 10a ist somit im Betrieb formschlüssig. Das Halteelement 15 ist in Form einer Halteplatte / plattenförmig / scheibenförmig ausgestaltet. Das Halteelement 15 ist weiter an dem Gehäuse 2 ortsfest befestigt. In diesem Zusammenhang sei auch darauf hingewiesen, dass prinzipiell weitere Anbringungsarten des ersten Schöpfabschnittes 10a möglich sind. Demnach ist der erste Schöpfabschnitt 10a in weiteren Ausführungen stoffschlüssig, bspw. mittels einer Schweißverbindung, an dem Halteelement 15 angebracht. Auch rein kraftschlüssige Verbindungen, wie ein Presssitz der Abführleitung 22 in dem Halteelement 15, sind denkbar.

In der Fig. 2 ist gut zu erkennen, wie der Schöpfabschnitt 10; 10a sowie der Sammelbereich 9 im Betrieb des Hybridmoduls 1 zusammenwirken. Hieraus ist nochmals verdeutlicht, dass ein Hydraulikmittel im Betrieb an einem radial innerhalb der Reibelemente 18a, 18b, 19a, 19b angeordneten Zentraleinlass 25 in einen durch das Gehäuse 2 umschlossenen Innenraum eintritt. Das Hydraulikmittel wird derart in axialer und radialer Richtung des Hybridmoduls 1 verteilt, dass ein erster Anteil an Hydraulikmittel die Reibelemente 18a, 19a der ersten Reibkupplung 6 und ein weiterer zweiter Anteil an Hydraulikmittel die Reibelemente 18b, 19b der zweiten Reibkupplung 7 in radialer Richtung durchströmt. Der Rotorträger 11 ist derart ausgebildet, dass er das Hydraulikmittel radial außerhalb der Reibelemente 18b, 19b anstaut und gezielt dem an ihn axial anschließenden Sammelbereich 9, vorzugsweise über eine der Übersichtlichkeit nicht näher dargestellten axial verlaufenden Sammelrinne / Sammelnut, zuführt. Radial außerhalb der Reibelemente 18a, 18b, 19a, 19b tritt das Hydraulikmittel im Betrieb somit selbstständig in den Sammelbereich 9 ein. Von dem Sammelbereich 9 wird das Hydraulikmittel über den Schöpfabschnitt 10; 10a abgeführt und einem hier der Übersichtlichkeit halber nicht weiter dargestellten Rückhalteraum zugeführt. Die Abführleitung 22 des Schöpfabschnittes 10; 10a ragt in axialer Richtung durch ein Durchgangsloch 13 in der gehäusefesten Seitenwand 12, hier einer Wandung eines Getriebegehäuses, hindurch.

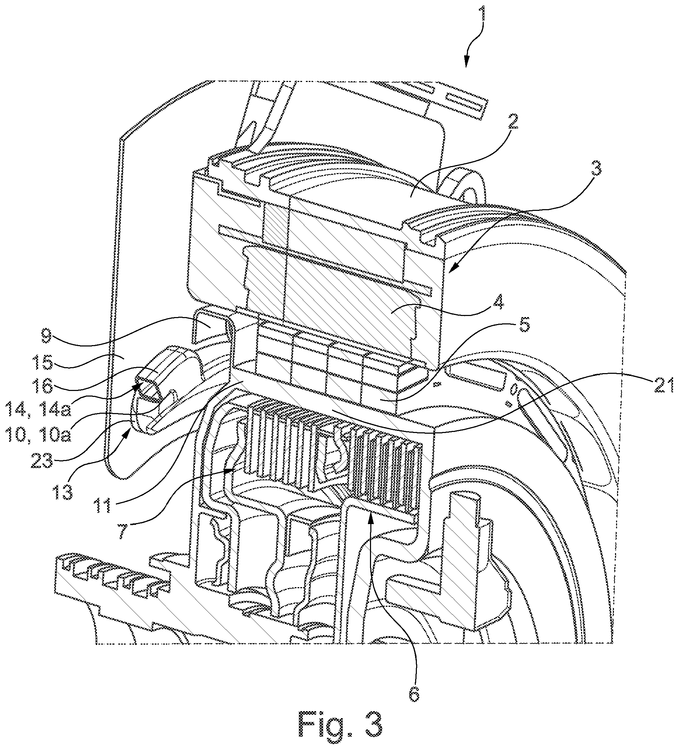

In der Darstellung der Fig. 3 ist das Halteelement 15 in Form eines Haltebleches in perspektivischer Ansicht gut zu erkennen, wobei verdeutlicht ist, dass der Schöpfabschnitt 10; 10a räumlich gehäusefest angebracht ist. Der Stutzen 23 durchdringt das Halteelement 15 im Bereich eines Durchgangsloches in axialer Richtung.

Der Sammelbereich 9 ist stoffschlüssig über eine Schweißverbindung mit dem Rotorträger 11 verbunden. Es sind jedoch wiederum auch prinzipiell andere stoffschlüssige und/oder kraftschlüssige und/oder formschlüssige Verbindungen möglich.

In Bezug auf die nachfolgenden Ausführungsbeispiele wird der Kürze wegen lediglich auf die Unterschiede zu dem ersten Ausführungsbeispiel eingegangen. Die nachfolgenden Ausführungsbeispiele sind daher, sofern nicht weiter beschrieben, gemäß dem ersten Ausführungsbeispiel aufgebaut und funktionierend.

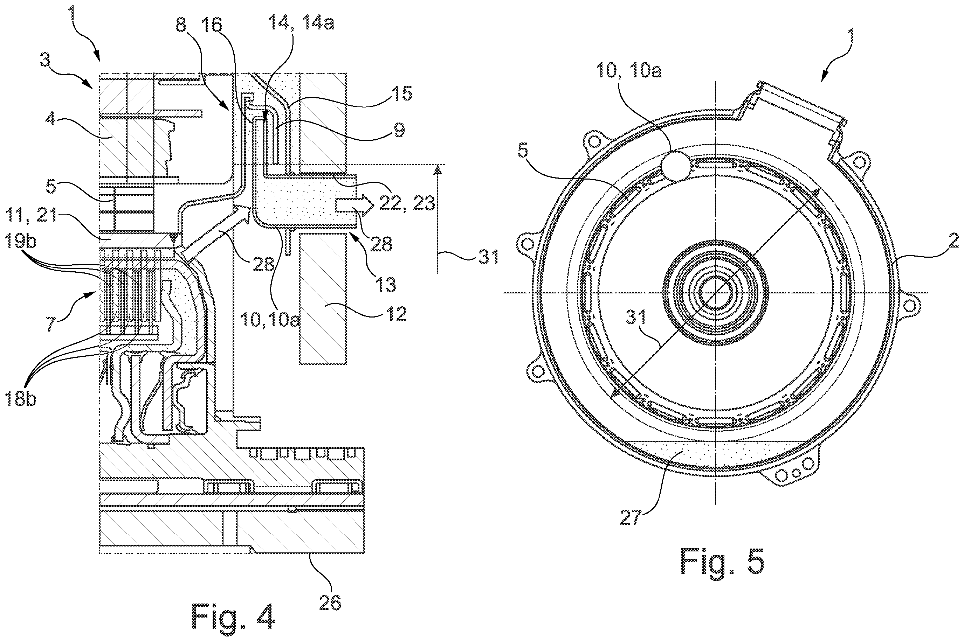

In Verbindung mit den Fign. 4 und 5 ist ein zweites Ausführungsbeispiel des Hybridmoduls 1 veranschaulicht. Der Sammelbereich 9 ist aus zwei umformtechnisch miteinander verbundenen Metallblechsegmenten ausgestaltet. Zudem ist der Sammelbereich 9 nicht mehr, wie in dem ersten Ausführungsbeispiel radial innerhalb des Stators 4 angeordnet, sondern in axialer Richtung neben dem Stator 4 angeordnet. Das Haltelement 11 ist dementsprechend formlich angepasst und bildet eine Wölbung / Biegung aus. Eine radiale Innenseite des Sammelbereiches 9 weist einen mit dem Bezugszeichen 31 gekennzeichneten Durchmesser auf, wodurch die in dem Sammelbereich 9 aufgenommene Menge an Hydraulikmittel im Betrieb definiert ist.

In Fig. 5 ist dann der Rückhalteraum 27 sowie die Position des Schöpfabschnittes 10; 10a in Umfangsrichtung verdeutlicht.

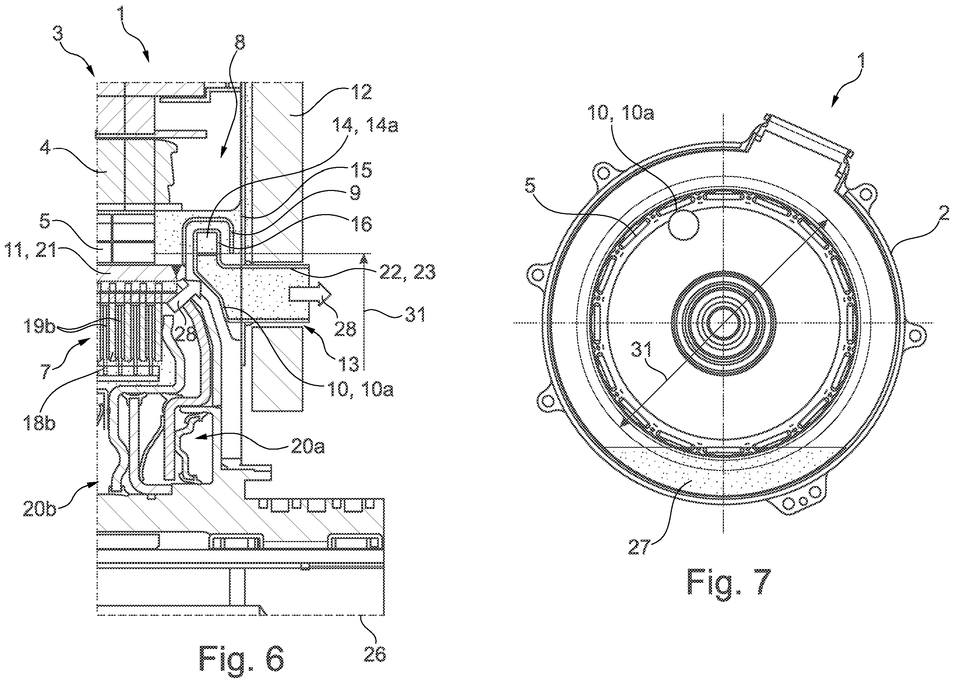

In dem Ausführungsbeispiel der Fign. 6 und 7 ist erkennbar, dass die Seitenwand 12 auch massiver ausgebildet sein kann. Auch ist auf einer radialen Innenseite der Seitenwand 12 auf einen Napfbereich 30 verzichtet.

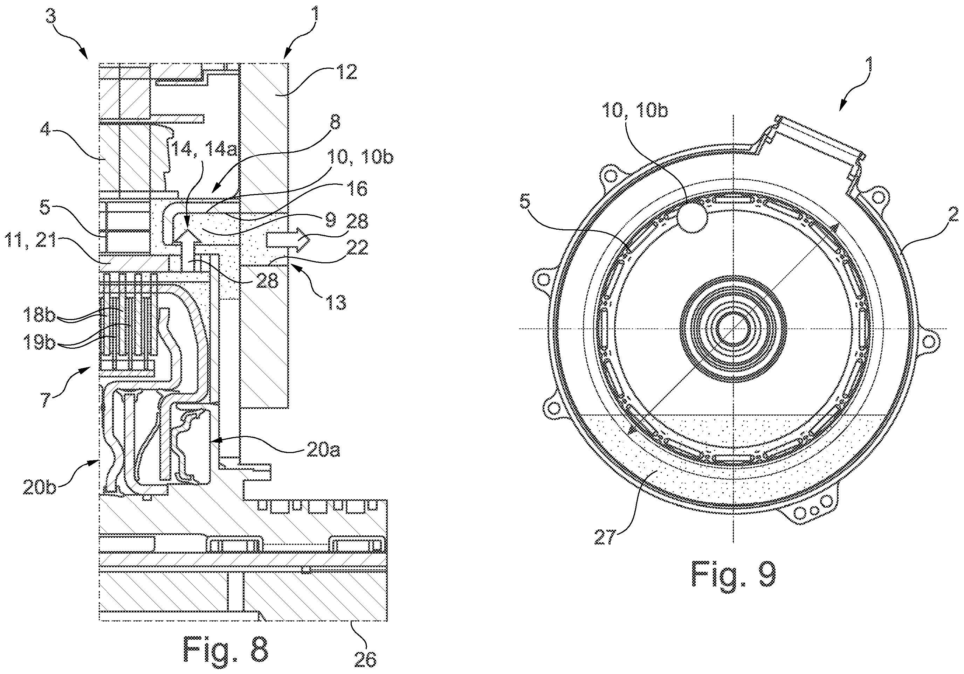

In dem Ausführungsbeispiel der Fign. 8 und 9 ist erkennbar, dass der Schöpfabschnitt 10 auch als ein zweiter Schöpfabschnitt 10b ausgebildet sein kann. In diesem Ausführungsbeispiel ist der zweite Schöpfabschnitt 10b als eine stoffeinteilig mit der Seitenwand 12 ausgebildete Schöpfnase umgesetzt. Der zweite Schöpfabschnitt 10b bildet somit eine Leitschaufel in Form der Schöpfnase aus. Die Schöpfnase ragt wiederum in den Sammelbereich 9 axial sowie radial hinein und schöpft das im Sammelbereich 9 angesammelte Hydraulikmittel ab. Die Abführleitung 22 ist unmittelbar in der Seitenwand 12 in Form des Durchgangsloches 13 eingebracht.

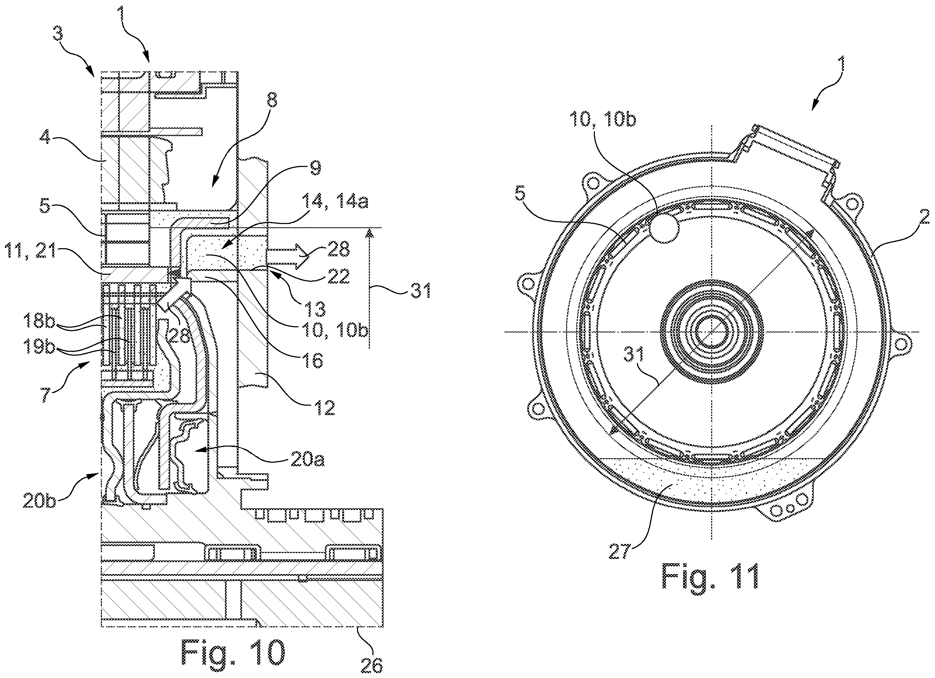

In dem Ausführungsbeispiel der Fign. 10 und 11 ist der Sammelbereich 9, nicht wie zuvor U-förmig, sondern im Wesentlichen L-förmig im Querschnitt ausgeformt. Hierbei ist der Sammelbereich 9 wiederum in radialer Richtung nach innen geöffnet.

In anderen Worten ausgedrückt, ist erfindungsgemäß ein P1 oder P2-Hybrid (Hybridmodul 1) mit ölgekühlter Einfach-/ Doppel- oder Dreifachkupplung 6, 7 innerhalb des Rotors 5 der E-Maschine 3 umgesetzt. Das Kühlöl der Kupplung(-en) 6, 7 wird in einem rotorfesten Ölauffangring (Sammelbereich 9) gefangen und weiter über ein oder mehrere Schöpfrohre 10; 10a in einen benachbarten Ölraum 27 z.B. eines Getriebes, transportiert. Das Schöpfrohr 10; 10a ist als Kunststoffteil ausführbar. Auch ist das Schöpfrohr 10; 10a als Blechrohr ausführbar. Auch sind weitere Werkstoffe denkbar. Das Schöpfrohr 10; 10a wird an dem Hybridmodul 1 vormontiert und taucht bei der Montage in eine Getriebeöffnung (Durchgangsloch 13) ein. Das Schöpfrohr 10; 10a ist ein- oder mehrflutig (mit einem oder mehreren Einlassöffnungen 14; 14a, 14b) ausgeführt. Das Kühlöl der Kupplung 6, 7 kann auch in einem rotorfesten Ölauffangring 9 aufgefangen werden und über eine oder mehrere Ölauffangnasen 10; 10b weiter transportiert werden.

In Fig. 1 ist ein Hybridmodul 1 zwischen Verbrennungsmotor und Getriebe dargestellt. Ein Torsionsschwingungsdämpfer 17 ist an die Kurbelwelle geschraubt und überträgt das Motormoment auf die Rotoreinheit (Rotorträger 11) des Hybridmoduls 1 über eine Steckverzahnung. Das Hybridmodul 1 besitzt ein Gehäuse 2, in dem der Stator 4 einer E-Maschine 3 montiert ist. Der Rotor 5 der E-Maschine 1 ist auf der Rotoreinheit 11 drehfest fixiert. Innerhalb dieser Rotoreinheit 11 ist die ölgekühlte Doppelkupplung bestehend aus zwei Teilkupplungen 6, 7 integriert. Einfach- und auch Dreifachkupplungen sind ebenfalls möglich. Am Rotor 5 ist ein U-förmiger Ölauffangring 9 drehfest befestigt. In diesen greift radial ein mit dem Modul 1 bzw. dem Stator 4 über ein Halteelement 15 drehfest befestigtes Schöpfrohr 10a ein. Das Schöpfrohr 10a taucht lokal in eine Getriebegehäusebohrung (Durchgangsloch 13) ein. Fig. 2 zeigt den Ölfluss durch die rotorintegrierte Kupplung 6, 7. Das Öl wird an einer Stelle 25 aus dem Getriebe der Kupplung 6, 7 aktiv zugeführt, durchfließt diese und ermöglicht die Kühlung der Kupplung 6, 7. Es tritt radial an einigen Stellen aus dem Kupplungskorb und wird in einen Ölauffangring 9 geleitet, mit dem es sich tangential mitdreht. Das an einer oder mehreren Stellen tangential hereinragende Schöpfrohr 10a fängt das Öl auf und leitet es axial in eine Getriebebohrung 13 und somit in das Getriebe zurück.

In den Fign. 8 und 9 wird das durch den Rotor 5 mitgenommene Öl über die Ölauffangnase 10b im Gehäuse 2; 12 abgefangen und in das Getriebe weitergeleitet.

Fign. 4 und 5 zeigen eine erfindungsmäßige Lösung mit Lage des Ölauffangringes 9 neben dem Stator 4. Der Stand des Ölsumpfes (Hydraulikmittel in Rückhalteraum 27) wird über den Durchmesser (Durchmesser einer radialen Innenseite des Sammelbereiches) des Ölauffangringes 9 bestimmt. Der Vorteil dieser Lösung ist ein relativ niedriger Stand des Ölsumpfes 27 nach dem Abstellen. Ein Fluten des Luftspaltes der E-Maschine 3 bei Betrieb wird komplett verhindert.

Fign. 6 und 7 zeigen eine erfindungsmäßige Lösung mit Lage des Ölauffangringes 9 radial unterhalb des Stators 4. Sie stellt einen Kompromiss aus den beiden vorher beschriebenen Lösungen dar. Der Stand des Ölsumpfes 27 wird auch hier über den Durchmesser des Ölauffangringes 9 bestimmt. Die in den Luftspalt laufende Ölmenge bei Betrieb ist gegenüber der Lösung nach den Fign. 8 und 9 geringer, dafür hat sie nicht den axialen Platzbedarf der Lösung nach den Fign. 4 und 5.

Fig. 3 zeigt eine detaillierte erfindungsmäßige Konstruktion. Zu erkennen sind das Haltelement 11, das Schöpfrohr 10a und der Ölauffangring 9. Die Verbindung des Schöpfrohres 10a mit dem Haltelement 11 kann auf verschiedene Arten erfolgen, abhängig vom gewählten Material: - Kunststoff: Einpressen, Schweißen, Einclipsen, etc.; - Metall: Einpressen, Schweißen, etc.. Dies gilt ebenso für die Verbindung des Ölauffangringes 9 mit dem Rotor 5.

Fign. 12 bis 13 zeigen eine beispielhafte Ausführung des erfindungsgemäßen Schöpfrohres 10a aus Kunststoff. Im dargestellten Fall ist es zweiflutig ausgeführt, um das mögliche Fördervolumen zu erhöhen. Ein- und mehrflutige Ausführungen sind denkbar. Das Kunststoffrohr 10a wird hier auf ein Halteblech 11 aufgeclipst und über Nasen 24 gehalten. Andere Werkstoffe und Verbindungen sind denkbar.

Fign. 10 und 11 zeigen eine erfindungsmäßige Lösung mit Lage des Ölauffangringes 9 radial unterhalb des Stators 4. In diesen Ölauffangringe 9 greifen eine oder mehrere Ölauffangnasen 10b in Umfangsrichtung ein und transportieren das Öl über eine oder mehrere Gehäusebohrungen 13 in das Getriebe zurück.

### Bezugszeichenliste

- 1: Hybridmodul
- 2: Gehäuse
- 3: elektrische Maschine
- 4: Stator
- 5: Rotor
- 6: erste Reibkupplung
- 7: zweite Reibkupplung
- 8: Kühleinrichtung
- 9: Sammelbereich
- 10: Schöpfabschnitt
- 10a: erster Schöpfabschnitt
- 10b: zweiter Schöpfabschnitt
- 11: Rotorträger
- 12: Seitenwand
- 13: Durchgangsloch
- 14: Eintrittsöffnung
- 14a: erste Eintrittsöffnung
- 14b: zweite Eintrittsöffnung
- 15: Halteelement
- 16: Schöpfkelch
- 17: Torsionsschwingungsdämpfer
- 18a: erstes Reibelement der ersten Reibkupplung
- 18b: erstes Reibelement der zweiten Reibkupplung
- 19a: zweites Reibelement der ersten Reibkupplung
- 19b: zweites Reibelement der zweiten Reibkupplung
- 20a: erste Betätigungseinrichtung
- 20b: zweite Betätigungseinrichtung
- 21: Hülsenbereich
- 22: Ableitung
- 23: Stutzen
- 24: Rastnase
- 25: Zentraleinlass
- 26: Drehachse
- 27: Rückhalteraum
- 28: Richtungspfeil
- 29: Öffnung
- 30: Napfbereich
- 31: Durchmesser

## Patentansprüche

1. Hybridmodul (1) für einen Antriebsstrang eines Kraftfahrzeuges, wobei das Hybridmodul aufweist:
ein Gehäuse (2),
eine in dem Gehäuse (2) aufgenommene elektrische Maschine (3), die einen Stator (4) und einen radial innerhalb des Stators (4) angeordneten Rotor (5) aufweist, und
eine radial innerhalb des Rotors (5) angeordnete hydraulisch gekühlte Reibkupplung (6, 7),
**gekennzeichnet durch**
eine zum Kühlen mehrerer Reibflächen der Reibkupplung (6, 7) ausgestaltete Kühleinrichtung (8), die einen ein Hydraulikmittel im Betrieb mitnehmenden, drehfest mit dem Rotor (5) gekoppelten, ringförmigen Sammelbereich (9) sowie einen gehäusefesten und in den Sammelbereich (9) hineinragenden Schöpfabschnitt (10; 10a, 10b) aufweist, über den im Betrieb das Hydraulikmittel einem Rückhalteraum zugeführt wird.

2. Hybridmodul (1) nach Anspruch 1, **dadurch gekennzeichnet, dass** der Sammelbereich (9) an einem den Rotor (5) aufnehmenden Rotorträger (11) drehfest angebracht ist.

3. Hybridmodul (1) nach Anspruch 1 oder 2, **dadurch gekennzeichnet, dass** ein erster Schöpfabschnitt (10a) vorgesehen ist, der als ein in den Sammelbereich (9) einmündendes Schöpfrohr ausgebildet ist.

4. Hybridmodul (1) nach Anspruch 3, **dadurch gekennzeichnet, dass** das Schöpfrohr durch ein in einer gehäusefesten Seitenwand (12) eingebrachtes Durchgangsloch (13) hindurchragt.

5. Hybridmodul (1) nach einem der Ansprüche 1 bis 4, **dadurch gekennzeichnet, dass** ein zweiter Schöpfabschnitt (10b) vorgesehen ist, der als eine unmittelbar an der gehäusefesten Seitenwand (12) angebrachten Schöpfnase ausgebildet ist.

6. Hybridmodul (1) nach einem der Ansprüche 1 bis 5, **dadurch gekennzeichnet, dass** der Schöpfabschnitt (10; 10a, 10b) eine in Umfangsrichtung des Rotors (5) weisende Eintrittsöffnung (14; 14a, 14b) aufweist, die in radialer Richtung in den Sammelbereich (9) hineinragt.

7. Hybridmodul (1) nach einem der Ansprüche 1 bis 6, **dadurch gekennzeichnet, dass** der Schöpfabschnitt (10; 10a, 10b) aus einem Kunststoff oder einem Metall gebildet ist.

8. Hybridmodul (1) nach einem der Ansprüche 1 bis 7, **dadurch gekennzeichnet, dass** der Schöpfabschnitt (10; 10a, 10b) mittels eines Halteelementes (15) an dem Gehäuse (2) direkt oder indirekt befestigt ist.

9. Hybridmodul (1) nach einem der Ansprüche 1 bis 6, **dadurch gekennzeichnet, dass** mehrere Schöpfabschnitte (10; 10a, 10b) in Umfangsrichtung verteilt angeordnet sind.

10. Hybridantriebsstrang für ein Kraftfahrzeug, mit einem Hybridmodul (1) nach zumindest einem der Ansprüche 1 bis 9.

## Claims

1. A hybrid module (1) for a drive train of a motor vehicle, wherein the hybrid module has:
a housing (2),
an electric machine (3) accommodated in the housing (2) which has a stator (4) and a rotor (5) arranged radially inside the stator (4), and
a hydraulically cooled friction clutch (6, 7) arranged radially inside the rotor (5),
**characterized by**
a cooling device (8) designed to cool a plurality of friction surfaces of the friction clutch (6, 7), which has an annular collecting area (9), which is non-rotatably coupled to the rotor (5) and entrains a hydraulic medium during operation, and has a scoop section (10; 10a, 10b) which is fixed to the housing and protrudes into the collecting area (9), via which scoop section the hydraulic medium is fed to a retention space during operation.

2. The hybrid module (1) according to claim 1, **characterized in that** the collecting area (9) is attached non-rotatably to a rotor carrier (11) accommodating the rotor (5).

3. The hybrid module (1) according to claim 1 or 2, **characterized in that** a first scoop section (10a) is provided, which is designed as a scoop tube opening into the collecting area (9).

4. The hybrid module (1) according to claim 3, **characterized in that** the scoop tube protrudes through a through-hole (13) made in a side wall (12) fixed to the housing.

5. The hybrid module (1) according to any one of claims 1 to 4, **characterized in that** a second scoop section (10b) is provided, which is designed as a scoop nose attached directly to the side wall (12) fixed to the housing.

6. The hybrid module (1) according to any one of claims 1 to 5, **characterized in that** the scoop section (10; 10a, 10b) has an inlet opening (14; 14a, 14b) pointing in the circumferential direction of the rotor (5), which inlet opening protrudes in the radial direction into the collecting area (9).

7. The hybrid module (1) according to any one of claims 1 to 6, **characterized in that** the scoop section (10; 10a, 10b) is formed from a plastic or a metal.

8. The hybrid module (1) according to any one of claims 1 to 7, **characterized in that** the scoop section (10; 10a, 10b) is fastened directly or indirectly to the housing (2) by means of a retaining element (15).

9. The hybrid module (1) according to any one of claims 1 to 6, **characterized in that** a plurality of scoop sections (10; 10a, 10b) are arranged distributed in the circumferential direction.

10. A hybrid drive train for a motor vehicle, having a hybrid module (1) according to at least one of claims 1 to 9.

## Revendications

1. Module hybride (1) pour un groupe motopropulseur d'un véhicule automobile, le module hybride présentant :
un carter (2),
une machine électrique (3) logée dans le carter (2) et présentant un stator (4) et un rotor (5) disposé radialement à l'intérieur du stator (4) et
un embrayage à friction refroidi hydrauliquement (6, 7) disposé radialement à l'intérieur du rotor (5),
**caractérisé par**
un dispositif de refroidissement (8) conçu pour refroidir une pluralité de surfaces de friction de l'embrayage à friction (6, 7), qui a une zone de collecte annulaire (9) qui est accouplée solidaire en rotation au rotor (5), entraînant un fluide hydraulique durant le fonctionnement, ainsi qu'une section de puisage (10 ; 10a, 10b) faisant saillie dans la zone de collecte (9) et fixée au carter, par laquelle le fluide hydraulique est amené vers un espace de rétention durant le fonctionnement.

2. Module hybride (1) selon la revendication 1, **caractérisé en ce que** la zone de collecte (9) est montée solidaire en rotation sur le support de rotor (11) logeant le rotor (5).

3. Module hybride (1) selon la revendication 1 ou 2, **caractérisé en ce qu'**une première section de puisage (10a) est conçue sous la forme d'un tube de puisage débouchant dans la zone de collecte (9).

4. Module hybride (1) selon la revendication 3, **caractérisé en ce que** le tube de puisage fait saillie au travers d'un trou traversant (13) ménagé dans une paroi latérale (12) fixée au carter.

5. Module hybride (1) selon l'une quelconque des revendications 1 à 4, **caractérisé en ce qu'**une seconde section de puisage (10b) est conçue sous la forme d'un bec de puisage monté directement sur la paroi latérale (12) fixée au carter.

6. Module hybride (1) selon l'une quelconque des revendications 1 à 5, **caractérisé en ce que** la section de puisage (10 ; 10a, 10b) présente une ouverture d'admission (14 ; 14a, 14b) dirigée dans la direction circonférentielle du rotor (5), qui fait saillie radialement dans la zone de collecte (9).

7. Module hybride (1) selon l'une quelconque des revendications 1 à 6, **caractérisé en ce que** la section de puisage (10 ; 10a, 10b) est formée d'une matière plastique ou d'un métal.

8. Module hybride (1) selon l'une quelconque des revendications 1 à 7, **caractérisé en ce que** la section de puisage (10 ; 10a, 10b) est fixée directement ou indirectement au carter (2) au moyen d'un élément de retenue (15).

9. Module hybride (1) selon l'une quelconque des revendications 1 à 6, **caractérisé en ce qu'**une pluralité de sections de puisage (10 ; 10a, 10b) sont réparties dans la direction circonférentielle.

10. Groupe motopropulseur hybride pour un véhicule automobile comprenant un module hybride (1) selon au moins l'une quelconque des revendications 1 à 9.
